# EUROPEAN PATENT SPECIFICATION

(11) **EP 2 803 444 B1**
(45) Date of publication and mention of the grant of the patent: **06.07.2016**
(21) Application number: 14162213.4
(22) Date of filing: 28.03.2014
(51) Int. Cl.: B23Q 3/155

(54) **Tool feeder for a manipulation device for exchange of tools on machine tools, comprising a safety device**
Werkzeugeinführer für eine Handhabungsvorrichtung für das Auswechseln von Werkzeugen in Werkzeugmaschinen, umfassend einer Sicherheitsvorrichtung
Dispositif d'alimentation d'outils pour un manipulateur pour l'échange d'outils dans une machine outil, comprenant un dispositif de sécurité

(30) Priority: 16.05.2013 CZ 20130358
(43) Date of publication of application: 19.11.2014
(73) Proprietor: VÚTS, a.s., Liberec XI - Ruzodol I 460 01 Liberec (CZ)
(72) Inventor: Kohout, Radek, 47125 Jablonne v Podjestedi (CZ); Hladik, Karel, 46001 Liberec (CZ); Heinze, Miroslav, 46311 Liberec (CZ); Vencl, Tomas, 46001 Liberec (CZ)
(74) Representative: Musil, Dobroslav

(56) References cited:
- EP-A2- 0 253 197
- DD-A1- 149 331
- SU-A1- 1 052 366

## Description

### Technical field

A tool feeder for a manipulation device for the exchange of tools, especially for large machinetools, comprising two pairs of clamping jaws consisting of two-armed levers which are arranged mirror-symmetrically and are coupled to a hinged mechanism whose driving means are fluid cylinders.

### Background art

The development of highly efficient heavy machine-tools, especially machine-tool centers, has brought one problem that is becoming more and more important - namely the negative effect of the time needed for the exchange of cutting tools in the periods between individual operations or the time needed for the change of the manufacturing series.

Using large-size machines and large tool magazines involves carrying a tool along a path of considerable length. It is advantageous if the actual manipulation arm, which removes a tool from a tool magazine and puts it into the working element of the machine tool, has two gripping means, so that in the machine to which it has transferred the new tool it can get hold of a tool which is, for example, in the spindle of the machine with the aid of the free means and with the other gripping means it inserts the new tool into the spindle. These manipulators usually have a symmetric arm which has a gripper on both sides and is pivotable about the center of its length by 180°.

The solution according to CZ 244239 B1 utilizes a feeder of this type, arranged pivotably in the range of rotation 4 times 90°, which has at both ends forcipated grippers whose clamping jaws are released and clamped by a hydraulic cylinder with a leverage.

CZ 275504 B6 uses a gripper whose clamping jaws when being empty are pushed to each other by a spring. Before approaching the tool the clamping jaws are opened by a cam mechanism against the force of the spring, whereby during manipulation the tool is held by the clamping jaws in the clamping position under the action of the spring. The clamping jaws are controlled by a hydraulic cylinder.

A device for manipulating heavy tools is solved by CZ 303528 B6. Its manipulation arm is composed of an elongated carrying body which is pivotable about its center. Arranged in the end portions of the carrying body are slidable supports provided with one-armed releasable clamps. The slidable supports are arranged in a linear guide, in which they can move away from the pivoted center of the body or towards it. The sliding movement of the supports and releasing the clamps is ensured by hydraulic or pneumatic cylinders, or by an electrical drive. The clamping action of the jaws is performed by a spring.

DE 2443962 A1 solves the gripping of objects of different sizes and shapes by means of a pair of clamping jaws of a manipulating robot, each of them being provided with two contact extensions. On one of the jaws both extensions are part of a balance beam which is mounted swingably on this jaw. The clamping jaws are composed of two-armed levers, whose gripping arm is several times longer than the arm which is acted upon by the controlling force exerted by the hydraulic cylinder. The objective of this invention is adjustment of the position of the contact extensions to different shapes of the object being gripped, whereby a method of misgrip detection is protected by the patent. The device does not deal with attaining high clamping forces by means of a pneumatic drive - the geometry of its mechanism is antagonistic to this requirement. A similar goal is pursued by the solution of a robotic manipulator according to US 4728131 A. The relationship between the lengths of the gripping arms is opposite in relation to the clamping forces, which is made possible by a complex multi-joint mechanism and a control hydraulic cylinder. According to the background art, manipulation devices for heavy machines and their heavy and large-size tools usually use hydraulic cylinders, which is due to the need for developing large gripping forces. In addition to being both expensive and heavy, hydraulic systems may cause in case of untightness undesirable fouling of the machine and the surrounding area. SU-A-1052366 discloses a tool feeder according to the preamble of appended claim 1.

The goal of the present invention is to provide a manipulator which would not be attended by a hydraulic system and which would ensure a tool being held safely during its transfer between the tool magazine and the machine and especially when being inserted into the spindle, etc. This is of great importance particularly with respect to large-size cylindrical tools and their high overturning moment when being gripped from one side.

### Principle of the invention

The goal of the invention is achieved by a tool feeder of a manipulation device for the exchange of tools, especially for large machinetools, whose principle is defined by appended claim 1.

Using pneumatic cylinders for the purpose of developing a force necessary for clamping the tool is favourable in terms of the price, energy consumption, a possibility of using compressed air distribution systems in workshops as well as the machine cleanliness. In addition, the security of the operation is ensured by the automatic locking of the clamping jaws in the event of pneumatic system failure.

The safety device is thus formed by simple but at the same time reliable means.

In the clamping position of the clamping jaws, the ratio of the clamping force in the area of the contact surfaces of the clamping jaws to the force in the axis of the piston rod, exerted by the pressure of the air in the space above the piston of the pneumatic cylinder, is at least 5.

This arrangement of the hinged mechanism makes it possible to use pneumatic gripping of the tools in the manipulator also for attending large machines which use heavy tools.

### Description of drawings

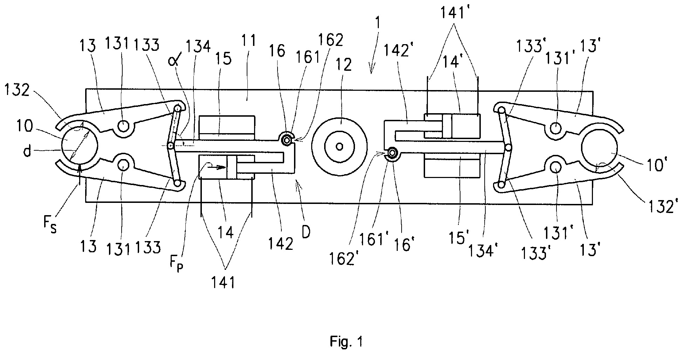

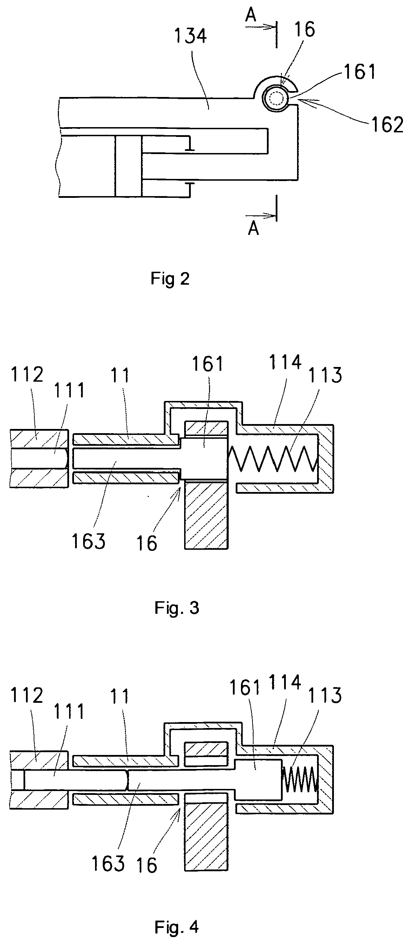

The drawing shows an example of embodiment according to the invention, where Fig. 1 is a plan view of a feeder of the manipulation mechanism, Fig. 2 is a detail "D" of the plan view according to Fig. 1, Fig. 3 shows a retaining pin when the drive rod is in the locked position in a cross section A-A according to Fig. 2 and Fig. 4 shows the retaining pin when the drive rod is in the released position in a cross section A-A according to Fig. 2.

### Specific description

Devices for manipulating with tools of the machine-tools during their changing comprise tool magazines, devices for gripping a tool for the feeder, devices for the transfer of the tool to the particular area of the machine, for adjustment of the position of the tool to the position of the clamping device, as well as devices for inserting and fixing the tool in the clamping device, for example in the work spindle of the machine.

The device according to this technical solution is a feeder **1** which is the last end member of a usually complicated kinematic mechanism of the manipulator. Fig. 1 shows a plan view of the feeder **1**.

The feeder **1** is made up of a body **11** in the shape of a flat elongated block which carries means for gripping the stem of a tool **10**. The components of the feeder **1** are arranged substantially mirror-symmetrically on the body **11** relative to its center, in which is located a central hub **12** for mounting the feeder **1** pivotably at the end of an unillustrated movable arm of the manipulator. The position of the feeder **1** relative to the axis of the rotation of the hub **12** is secured by means of an unillustrated drive located on the movable arm of the manipulator.

Arranged at each end of the feeder **1** is a pair of clamping jaws **13**, **13'.** The jaws **13**, **13'** are pivotably mounted approximately in their middle section on pins **131**, firmly fixed in the body **11** perpendicularly to its surface. The gripping ends of the pair of the clamping jaws **13**, **13'** are directed outwardly from the body **11,** being provided with inner circular arcs which constitute the contact surfaces **132** for the stem of the tool **10.** The driving ends of the jaws **13**, **13'** are hinge-connected to the ends of the struts **133**.

Fixed in the area between the jaws **13**, **13'** and the central hub **12** in a longitudinal direction of the body **11** of the feeder **1** are double-acting pneumatic cylinders **14, 14**'. The inlets into their working spaces below and above the piston are connected to the pipelines of the compressed air **141**, **141'** of the unillustrated pneumatic circumference. The end of the piston rod **142, 142'** of the double-acting pneumatic cylinder **14**, **14'** is connected fixedly to one end of the drive rod **134**, **134'**, which is slidably mounted in a linear guide **15**, **15'**, parallel to the axis of the pneumatic cylinder **14**, **14'**. Thus the piston rod 142, **142'** of the pneumatic cylinder **14**, **14'** and the drive rod **134, 134'** substantially constitute a common body. At the point of the connection of the piston rod **142**, **142'** and the drive rod **134, 134'** a through opening **16**, **16**' for the retaining pin **161**, **161'** is formed in this body perpendicularly to the plane of the body **11** of the feeder **1.** The circumference of the through opening **16**, **16'** is broken off by a releasing groove **162**, **162'** (Fig. 2 to 4), lying parallel to the axis of the opening **16**, **16'**.

The retaining pin **161**, **161'** is by means of the lifting rod **163**, **163'** slidably mounted in the body **11** of the feeder **1** in the area which corresponds to the position of the opening **16**, **16'** with the clamping jaws **13**, **13'** in the clamping position. The diameter of the lifting rod **163**, **163'** is smaller than the width of the releasing groove **162, 162'.**

If the feeder **1** is turned to a horizontal position in relation to an unillustrated movable arm of the manipulator, the axis of the lifting rod **163, 163'** of the retaining pin **161, 161**' lies in the axis of the piston rod **111, 111**' of the unlocking small pneumatic cylinder **112, 112'** arranged in the body of the unillustrated arm of the manipulator perpendicularly to the basic plane of the body **11** of the feeder **1.** The free end of the retaining pin **161, 162'** is acted upon by a locking pressure spring **113** led in a clamping sleeve **114**, which is part of the body **11** of the feeder **1**. In the situation when the piston **111, 111**' of the unlocking pressure cylinder **112 112'** is not pressed by the compressed air of the pneumatic circumference, the retaining pin **161, 161**' is under the action of the safety spring **113** inserted into the opening **16**, **16'** of the drive rod **134, 134'**, allowing some radial clearance. The drive rod **134, 134'** is in this manner made immobile, its clamping jaws **13**, **13** being in the clamping position, safely holding the tool **10**.

It is therefore only possible to unlock the drive rod **134'**, **134'** in the horizontal position of the feeder **1,** whereby the supply of compressed air of the pneumatic circumference is necessary. Due to the pressure of the air in the unlocking pneumatic cylinder **112**, **112'** the retaining pin **161, 161'** projects against the force of the locking spring **113** outside the opening **16** in the common body of the drive rod **134**, **134'.** The piston rod **142**, **142'** of the double-acting pneumatic cylinder **14**, **14'** under the action of the pressure of the air supplied below the piston of the pneumatic cylinder **14**, **14'** projects towards the tool **10**, which is made possible by the releasing groove **162, 162'** passing by the lifting rod **163, 163'.**

If the feeder **1** rotates the manipulator arm or shifts it, the clamping jaws **13, 13'** are always in a clamping position, tightly holding the tool **10** which is being transferred. The retaining pin **161, 161'** can only be unlocked if there is a requirement to release the clamping jaws **13**, **13'**. If there is no compressed air in the pneumatic system (the system has been switched off, or an undesirable decrease in the pressure occurred due to a failure, etc.) and a tool is gripped in the jaws **13**, **13'**, the retaining pin **161, 161**' is inserted into the opening **16, 16'** by the force of the locking pressure spring **113** acting on it. If there is working pressure in the pneumatic system and at the same time there is a requirement to release the clamping jaws **13**, **13'**, the pressure of the air of the unlocking pneumatic cylinder **112** acts against the force of the locking pressure spring **113**, the retaining pin **161** projects from the opening **16** and the piston of the double-acting pneumatic cylinder **14** can release the clamping jaws **13**.

During the changing of a tool, an unillustrated mechanism of the manipulator moves the feeder **1** to the tool magazine so that it approaches it by the side provided with a pair of jaws **13**. By means of an unillustrated activator an impulse is generated for feeding compressed air under the piston of the double-acting pneumatic cylinder **14** and into the unlocking pneumatic cylinder **112** of the retaining pin **161.** The retaining pin **161** projects from the opening **16,** the piston rod **142** and the drive rod **134** move towards the clamping jaws **13** which by means of the struts **133** turn about the pins **131** into the released position. The mechanism of the manipulator shifts the whole feeder **1** towards the tool **10** stored in an unillustrated tool magazine and the contact surface **132** of the clamping jaws **13** surrounds the stem of the tool which is to be replaced. An impulse is generated by the activator to supply compressed air above the piston of the pneumatic cylinder **14**, whereupon the piston rod **142** and the drive rod **134** move away from the clamping jaws **13,** which by means of the struts **133** turn about the pivots **131** to a position in which they grip the stem of the tool **10.**

The mechanism of the manipulator transfers the feeder **1** to the tool which is being clamped in the clamping device of the machine tool so that it approaches the clamped tool by a second pair of the clamping jaws **13'**. The feeder **1** grips the clamped tool by empty jaws **13'** using a method described for removing the tool from the tool magazine, whereupon the feeder **1** is turned by the mechanism of the manipulator by 180°. As a result of the movement of the mechanism of the manipulator, the new tool **10** is inserted into the clamping device of the machine tool, which clamps it. The clamping jaws **13'** are released by performing a procedure that is opposite to that used for removing the tool **10** from the tool magazine.

Owing to the fact that at the closing of the clamping jaws **13 13'** the struts **133, 133'** mount to a position which is nearly perpendicular to the drive rod **134, 134'**, there is a considerable increase in the clamping force between the contact surface **132** of the clamping jaws **13**, **13'** and the stem of the tool **10**, which is essential for the safe transfer of the tool **10** from the tool magazine to the clamping device of the machine-tool and the other way round, especially for inserting the tool **10** into the clamping device of the machine-tool as well as removing it. A unified diameter **d** of the tool stem is supposed to be used, since all the tools are provided with a unified known normalized clamping circular prismatic groove corresponding to the shape of the contact surfaces of the jaws **13, 13'.** The angle **α** between the line connecting the joints of the strut **133** and the axis of the drive rod **134**, **134'** is in an example of embodiment **α** = 80°. The ratio **pz** of the clamping force **Fs** in the area of the contact surfaces **132, 132'** of the clamping jaws **13, 13'** to the force **Fp** exerted on the piston rod **142**, **142'** is in the example of embodiment **pz** = 10. In the released position of the clamping jaws **13, 13'** due to the instantaneous mutual position of the line connecting the joints of one and the other strut **133, 133'** and the axis of the drive rod **134, 134'** the corresponding ratio of the forces **po** could be at the most **po** = 1,5. For this reason it is possible to use a pneumatic system for clamping the tool, the system being suitable as to the operation, safety, energy demands and cleanliness of the machine environment. Therefore a great force of the clamping jaws is attained by the air pressure which is several times lower compared to the pressures used in hydraulic systems.

In the event of a failure of the compressed air source or, for example, in case of any break-down of the compressed air supply system during the transfer of the tool **10** in the clamped jaws **13**, **13'**, the releasing of the clamping jaws **13**, **13'** is blocked by the retaining pin **161, 161',** inserted in the opening **16**, **16'** in the common part of the piston rod **142**, **142'** and the drive rod **134**, **134'.**

The device according to the technical solution is ideal particularly for large and heavy tools used on heavy machine-tools. These tools may have a weight greater than 50 kg and/or due to their length and weight distribution they may cause an overturning moment around 150 Nm.

### List of references

- 1: feeder
- 10: tool
- 11: body (of the feeder)
- 111: piston rod (of the unlocking pneumatic cylinder)
- 112: unlocking pneumatic cylinder
- 113: locking pressure spring (of the retaining pin)
- 114: clamping sleeve (of the pressure spring)
- 12: hub (of the pivoting arrangement of the feeder)
- 13, 13': clamping jaw
- 131, 131': pivot pin (of the clamping jaw)
- 132: contact surface (of the clamping jaw)
- 133: strut
- 134, 134': drive rod (of the clamping jaws)
- 14, 14': pneumatic cylinder
- 141, 141': pipelines of compressed air
- 142, 142': piston rod of the pneumatic cylinder
- 15, 15': linear guide (of the drive rod)
- 16, 16': opening (for the retaining pin)
- 161, 161': retaining pin
- 162, 162': releasing groove (in the circumference of the opening 16, 16')
- 163, 163': lifting rod (of the retaining pin)
- F_{P}: force in the piston rod of the pneumatic cylinder developed by the pressure of the air above the piston
- Fs: clamping force in the area of the contact surfaces of the clamping jaws
- po: ratio F_{S} / F_{P} in the released position of the clamping jaws
- pz: ratio F_{S} / F_{P} in the clamping position of the clamping jaws
- α: angle of the line connecting the joints of one and the other strut with the axis of the drive rod

## Claims

1. A tool feeder (1) for a manipulation device for the exchange of tools (10, 10'), particularly for large machine-tools, comprising two pairs of clamping jaws (13, 13'), arranged mirror-symmetrically, designed as two-armed levers which are coupled to a hinged mechanism whose drive means are fluid cylinders, wherein the fluid cylinders are double-acting pneumatic cylinders (14, 14'), whereby in the clamping position of the clamping jaws the connecting line between the joints of one or the other strut forms an angle with the axis of the drive rod in the range of 75 to 89°, **characterized by that** the feeder is for each pair of clamping jaws (13, 13') provided with a safety device keeping the clamping jaws which are gripping the tool in the clamping position in case of an undesirable decrease in the pressure in the pneumatic system, *said safety device is a retaining pin (161, 161') mounted slidably in the body (11) of the feeder (1) which is in the locked position inserted in an opening (16, 16') connected in the clamping position of the clamping jaws (13, 13') to a drive rod (134, 134') by the force of a locking spring (113), the retaining pin (161, 161') being coupled to a pneumatic cylinder (112) acting against the force of the locking spring* (*113*).

2. A tool feeder (1) according to Claim 1 or 2, **characterized by** that the ratio (pz) of the clamping force (F_{S}) in the area of the contact surfaces (132, 132') of the clamping jaws (13, 13') to the force (F_{P}) in the axis of the piston rod (142, 142'), developed by the pressure of the air in the space above the piston of the pneumatic cylinder (14, 14'), is at least 5.

## Patentansprüche

1. Werkzeuggreifer (1) für Handhabungsvorrichtung zum Austausch der Werkzeuge (10, 10'), insbesondere für große Bearbeitungsmaschinen, der in einer spiegelbildlichen Anordnung zwei Paare der Klemmbacken (13, 13') aufweist, die als doppelarmige Hebel gebildet sind, die mit einem Gelenkgetriebe verkoppelt sind, dessen Antriebsmittel Flüssigkeitszylinder sind, wobei die Flüssigkeitszylinder doppelt wirkende pneumatische Zylinder (14, 14) sind, wobei in der Lage der verklemmten Klemmbacken die Verbindungdgerade von Gelenken einer oder anderer Stütze mit der Achse der Antriebsstange solchen Winkel einschließt, der im Bereich von 75° bis 89° liegt, **dadurch gekennzeichnet, dass** der Werkzeuggreifer (1) für jedes Paar der Klemmbacken (13, 13') ein Sicherheitsmittel aufweist, das die das jeweilige Werkzeug (10) in einer verklemmten Lage klemmenden Klemmbacken (13, 13') im Falle einer unerwünschten Druckabnahme in dem pneumatischen System aufrechterhält, dieses Sicherheitsmittel ein Sperrbolzen (161, 161') ist, der in dem Körper (11) des Werkzeuggreifers (1) schiebbar gelagert ist, der in der gesicherten Lage in der Öffnung (16, 16') hineingeschoben ist, die bei der verklemmten Lage der Klemmbacken (13, 13') mit der Antriebsstange (134, 134') durch die Kraft der Sicherungsfeder (113) verbunden ist, wobei der Sperrbolzen (161, 161') mit dem pneumatischen Zylinder (112) verkoppelt ist, der gegen die Kraft der Sicherungsfeder (113) wirkt.

2. Werkzeuggreifer (1) nach dem Anspruch 1, **dadurch gekennzeichnet, dass** das Verhältnis (pz) der Klemmkraft (F_{S}) in der Stelle der Berührungsflächen (132, 132') der Klemmbacken (13, 13') zur Kraft (F_{P}) in der Achse der Kolbenstange (142, 142'), die durch den Luftdruck im Raum über dem Kolben des pneumatischen Zylinders (14, 14') hergeleitet ist, mindestens 5 ist.

## Revendications

1. Le dispositif d'alimentation (1) de l'équipement de manupulation pour le changement d'outils (10, 10 '), en particulier pour les grandes machines-outils comprenantes, dans un arrengement en miroir, deux paires de mâchoires de serrage (13, 13') formés en tant que les leviers de double bras qui sont reliés au mécanisme de charnière dont le moyen d'entraînement il y a des cylindres de fluide tandis que les cylindres de fluide sont les vérins pneumatiques à double effet (14, 14), tandis que dans la position du serrage des poignées de mâchoires serrées les joints de connexion de l'un ou l'autre jambe de force forment avec l'axe de l'angle de la barre d'entraînement l'angle dans la plage de 75° à 89° **caractérisé en ce que** le dispositif d'alimentation (1) pour chaque paire de mâchoires de serrage (13, 13 ') est muni de moyens de sécurité qui maintiennent par les mâchoires de serrage (13, 13') l'outil (10) en position de fermeture en cas de chute de pression indésirable dans le système pneumatique ce moyendesécurité est la goupille de verrouillage (161,161') montée de façon coulissante dans le corps (11) du dispositif d'alimentation (1), qui est fixée en position insérée dans l'ouverture (16, 16') reliée à la position de serrage des mâchoires de serrage (13, 13 ') à la tige d'entraînement (134, 134 ') par la force du ressort de verrouillage (113), tandis que la broche de verrouillage (161, 161') est couplée à un cylindre pneumatique (112) agissant à l'encontre de la force du ressort de verrouillage (113).

2. Le dispositif d'alimentation (1) selon la revendication 1, **caractérisé en ce que** le rapport (pz) de la force de serrage (FC) à l'endroit des zones de contact (132, 132 ') des mâchoires de serrage (13, 13') avec la force (FP) dans l'axe de la tige de piston (142, 142 ') exercée par la pression de l'air dans l'espace au-dessus du piston du vérin pneumatique (14, 14) est au moins 5.
